# EUROPEAN PATENT SPECIFICATION

(11) **EP 3 520 533 B1**
(45) Date of publication and mention of the grant of the patent: **30.12.2020**
(21) Application number: 17784101.2
(22) Date of filing: 25.09.2017
(51) Int. Cl.: H04W 72/12

(54) **UPLINK TRANSMISSION OF MULTIPLE SERVICES OVER DIFFERENT PHYSICAL CONFIGURATIONS IN WIRELESS NETWORKS**
UPLINK-ÜBERTRAGUNG MEHRERER DIENSTE ÜBER VERSCHIEDENE PHYSIKALISCHE KONFIGURATIONEN IN DRAHTLOSEN NETZWERKEN
TRANSMISSION EN LIAISON MONTANTE DE MULTIPLES SERVICES SUR DIFFÉRENTES CONFIGURATIONS PHYSIQUES DANS DES RÉSEAUX SANS FIL

(30) Priority: 30.09.2016 US 201662402335 P
(43) Date of publication of application: 07.08.2019
(73) Proprietor: Apple Inc., Cupertino, CA 95014 (US)
(72) Inventor: PHUYAL, Umesh, Beaverton, Oregon 97006 (US); SHRESTHA, Bharat, Hillsboro, Oregon 97124 (US)
(74) Representative: Lang, Johannes
(86) International application number: PCT/US2017/053325
(87) International publication number: WO 2018/064002

(56) References cited:
- US-A1- 2015 271 836
- US-A1- 2016 227 574
- "3rd Generation Partnership Project; Technical Specification Group Radio Access Network; Evolved Universal Terrestrial Radio Access (E-UTRA); Medium Access Control (MAC) protocol specification (Release 12)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.6.0, 30 June 2015 (2015-06-30), pages 1-77, XP050965799, [retrieved on 2015-06-30]

## Description

### TECHNICAL FIELD

Embodiments relate to the field of wireless communications.

### BACKGROUND

Long Term Evolution (LTE) networks may provide wireless communication to various user equipments (UEs). Multiple other wireless systems may provide similar wireless communications as well.

US2015271836 relates to mapping bearer data in multiple connectivity configurations. A first portion of first data available for transmission over a first type bearer can be mapped to first uplink resources granted from a first base station, wherein the first type bearer is configured for transmission using the first base station and a second base station. Then, it can be determined whether a remaining portion of the first uplink resources are available after mapping the first portion of first data. If so, second data from a second type bearer can be mapped to at least a first portion of the remaining portion of the first uplink resources based at least in part on determining that the remaining portion of the first uplink resources are available. This can ensure, in some cases, that data for the second type bearer is also transmitted over the uplink resources.

US2016227574 relates to utilizing and/or mitigating superfluous resource grants in a wireless network. In one aspect, an uplink resource grant is received from a network node, and a plurality of protocol data units are mapped from a buffer over the uplink resource grant in generating a transport block for transmitting data. It is determined that additional resources remain on the uplink resource grant after mapping the protocol data units, and one or more additional protocol data units are mapped for opportunistically transmitting data from a best effort buffer over the additional resources. In another aspect, a maximum grant size for a user equipment (UE) is computed based at least in part on a modulation and coding scheme and a number of resource blocks configured for the UE, and used along with a priority of a bearer to determine whether to send a buffer status report for the bearer.

### SUMMARY

Aspects and embodiments of the invention are set out in the appended claims.

### BRIEF DESCRIPTION OF THE DRAWINGS

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
**Figure 1** illustrates a schematic high-level example of a wireless network that includes multiple user equipments (UEs), and an evolved Node B (eNB) or a next generation Node B (gNB), operating multiple services in physical resources of different configurations, in accordance with various embodiments.
**Figure 2** illustrates an example first physical resource of a first configuration, and an example second physical resource of second configuration, in accordance with various embodiments.
**Figure 3** illustrates an example operation flow for a UE, provided with a first physical resource of a first configuration associated with a first service having a first priority, to cause data associated with a second service with a second priority to be transmitted by the first physical resource, in accordance with various embodiments.
**Figure 4** illustrates an example operation flow for an eNB or a gNB, while granting a first physical resource of a first configuration associated with a first service having a first priority, to decode data associated with a second service received by the first physical resource, in accordance with various embodiments.
**Figure 5** illustrates an example medium access control (MAC) sub-header design to multiplex data associated with a first service having a first priority and data associated with a second service having a second priority, in accordance with various embodiments.
**Figure 6** illustrates another example MAC sub-header design to multiplex data associated with a first service having a first priority and data associated with a second service having a second priority, in accordance with various embodiments.
**Figure 7** illustrates a block diagram of an implementation for eNBs, gNodeB, and/or UEs, in accordance with various embodiments.
**Figure 8** illustrates interfaces of baseband circuitry as a part of an implementation for eNBs, gNodeB, and/or UEs, in accordance with various embodiments.
**Figure 9** illustrates a block diagram illustrating components able to read instructions from a machine-readable or computer-readable medium and perform any one or more of the methodologies discussed herein, in accordance with various embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

To meet the ever-increasing traffic demand, the 3rd Generation Partnership Project (3GPP) has been continuously increasing a wireless network capacity, capability, throughput, and/or efficiency of the Long Term Evolution (LTE) system through various techniques. A wireless network may be referred to as a mobile communication network. For example, 3GPP has defined a new air interface called as 5G New Radio (NR) technology. 5G NR technology may include new features and technologies to provide a customized connection to any device, such as a sensor, a vehicle, a smartphone, or other devices. In a 5G wireless network with NR technology, various services may be provided, e.g., an enhanced mobile broadband (eMBB) service, a massive machine type communications (mMTC) service, or an ultra reliable and low latency communications (URLLC) service. A user equipment (UE) in a 5G wireless network may support one or multiple of these services. Furthermore, in LTE, a UE may be generally configured to support transmission time interval (TTI) length of 1 millisecond (ms) in sub-carrier spacing of 15 KHz. In a 5G wireless network with NR technology, a UE may support multiple different TTIs, e.g., 0.5 ms, 1 ms, or other physical configurations. Embodiments herein may provide mechanisms for supporting uplink transmission by a UE for multiple services and physical configurations in a wireless network. Embodiments may be applicable to a 5G wireless network with NR technology, where multiple services, e.g., an eMBB service, an mMTC service, or an URLLC service, may be provided to a UE in physical resources of different configurations. In addition, embodiments herein may also be applicable to any other wireless network, where multiple services may be provided to a UE in physical resources of different configurations.

In embodiments, an apparatus may be used in a UE in a wireless network to communicate with an evolved Node B (eNB) or a next generation Node B (gNB). The apparatus may include a memory to store information about a threshold condition, and processing circuitry. The processing circuitry may identify an uplink grant for a first physical resource of a first configuration associated with a first service having a first priority. The processing circuitry may also identify data associated with a second service having a second priority, wherein the data is related to a second physical resource of a second configuration, and the second priority is different from the first priority. The processing circuitry may further cause, based on the threshold condition, the data associated with the second service to be transmitted by the first physical resource of the first configuration associated with the first service, where the threshold condition may be associated with the first configuration, the second configuration, the first priority, or the second priority.

In embodiments, a computer-readable medium may include instructions to cause an eNB or a gNB in a wireless network to communicate with a UE. When the instructions are executed by one or more processors, the eNB or the gNB may encode, for transmission to a user equipment (UE), an indication of an uplink grant for a first physical resource of a first configuration associated with a first service having a first priority. In addition, the eNB or the gNB may decode data received by the first physical resource of the first configuration associated with the first service, wherein the data are associated with a second service, have a second priority, and are related to a second physical resource of a second configuration, the second priority being different from the first priority.

In embodiments, an apparatus may be used in a UE in a wireless network to communicate with an eNB or a gNB. The apparatus may include a memory to store information about a threshold condition, and processing circuitry. The processing circuitry may identify an uplink grant for a first physical resource of a first configuration associated with a first service having a first priority. The processing circuitry may also identify data associated with a second service having a second priority, wherein the data is related to a second physical resource of a second configuration, and the second priority is different from the first priority. Furthermore, the processing circuitry may cause, based on the threshold condition, the data associated with the second service to be transmitted by the first physical resource of the first configuration when data associated with the first service available for transmission has a size smaller than a size of the first physical resource of the first configuration, wherein the threshold condition is associated with the first configuration, the second configuration, the first priority, or the second priority.

For the purposes of the present disclosure, the phrases "A/B," "A or B," and "A and/or B" mean (A), (B), or (A and B). For the purposes of the present disclosure, the phrases "A, B, or C" and "A, B, and/or C" mean (A), (B), (C), (A and B), (A and C), (B and C), or (A, B and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As discussed herein, the term "module" may be used to refer to one or more physical or logical components or elements of a system. In some embodiments, a module may be a distinct circuit, while in other embodiments a module may include a plurality of circuits.

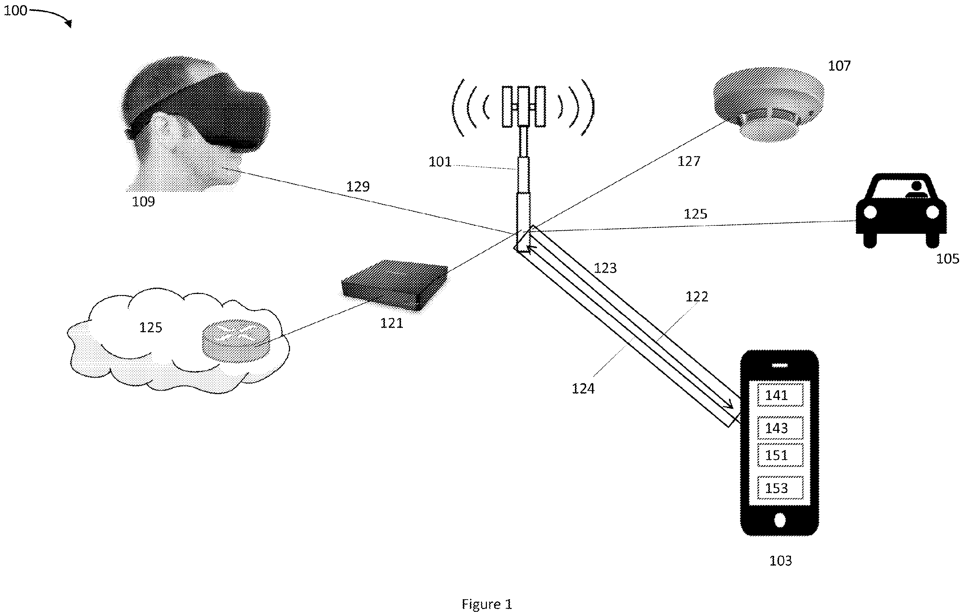

**Figure 1** illustrates a schematic high-level example of a wireless network 100 that includes multiple UEs, e.g., a UE 103 that may be a smartphone, a UE 105 that may be an onboard vehicle system, a UE 107 that may be a sensor, a UE 109 that may be a virtual reality equipment, and an eNB or a gNB, e.g., an eNB or a gNB 101, operating multiple services in physical resources of different configurations, in accordance with various embodiments. For clarity, features of an UE, an eNB, or a gNB, e.g., the UE 103, the UE 105, the UE 107, the UE 109, the eNB or the gNB 101, may be described below as examples for understanding an example UE, an eNB, or a gNB. It is to be understood that there may be more or fewer components within a UE, an eNB, or a gNB. Further, it is to be understood that one or more of the components within a UE, an eNB, or a gNB, may include additional and/or varying features from the description below, and may include any device that one having ordinary skill in the art would consider and/or refer to as a UE, an eNB, or a gNB. In the following, when an eNB may be used, it may refer to either an eNB or a gNB, depending on the wireless network 100 that includes the eNB.

In embodiments, the wireless system 100 may include multiple UEs, e.g., the UE 103, the UE 105, the UE 107, the UE 109, and the eNB 101 operating over a physical resource of a medium, e.g., a medium 123, a medium 125, a medium 127, a medium 129, or other medium. A medium, e.g., the medium 123, may include a downlink 122 and an uplink 124. The eNB 101 may be coupled to a core network 125. In some embodiments, the core network 125 may be coupled to the eNB 101 through a wireless communication router 121.

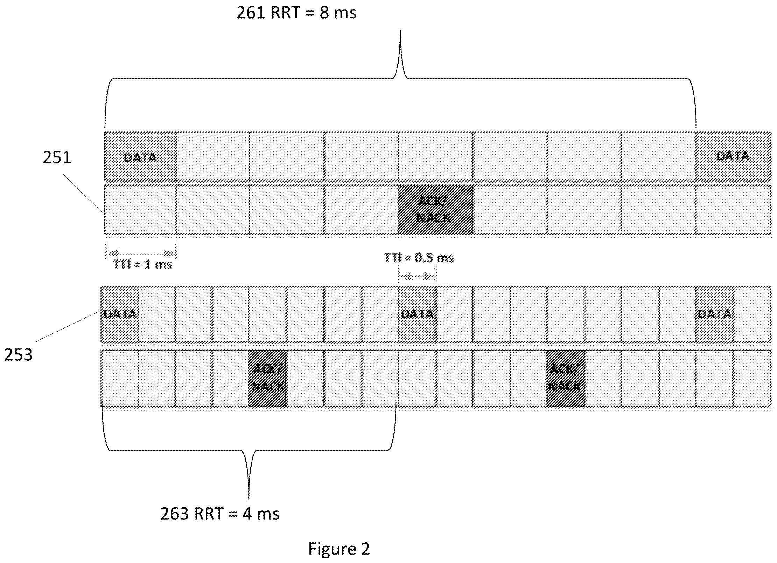

In embodiments, a UE, e.g., the UE 103, may operate multiple services, e.g., a service 141 or a service 143, in physical resources of different configurations, e.g., a configuration 151, or a configuration 153. The service 141 may have a first priority, and the service 143 may have a second priority, where the second priority may be different from the first priority. A physical resource of a configuration associated with a service may include a logic channel of the uplink 124, or the downlink 122, with an identification mapped to the configuration associated with the service, as shown in more details in Figure 2, Figure 5, and Figure 6. Similarly, other UEs, e.g., the UE 105, the UE 107, or the UE 109, may also operate multiple services in physical resources of different configurations, not shown.

In embodiments, a UE, e.g., the UE 103, may support multiple services, the service 141 or the service 143, which may be an eMBB service, an mMTC service, or an URLLC service. In embodiments, the wireless network 100 may be a 5G wireless network with NR technology, which may support an eMBB service, an mMTC service, and an URLLC service. The eMBB service may provide high bandwidth and data rate to various UEs, such as the virtual reality equipment, augment reality (AR) UEs, or high-resolution video streaming UEs. The mMTC service may support a massive number of machine-type devices, e.g., the sensor, for operations such as logging, metering, monitoring, and measuring. The URLLC service may support delay-sensitivity services such as the tactile internet, vehicular-to-vehicular communication for the onboard vehicle system, which may include autonomous driving and remote control functionality. In embodiments, the URLLC service may have a first priority, while the mMTC service or the eMBB service may have a second priority that is lower than the first priority. Data for the URLLC service may have stricter delay requirements compared to data of other services, e.g., the mMTC service or the eMBB service. Hence, it may be beneficial to transmit data for the URLLC service faster than data for other services, leading to a higher priority for the URLLC service.

In addition, a UE, e.g., the UE 103, may support multiple configurations for physical resources granted to the UE. In embodiments, the UE 103 may support the configuration 151 and the configuration 153, where the configuration 151 may include a first transmission time interval (TTI), and the configuration 153 may include a second TTI different from the first TTI. In embodiments, the first TTI or the second TTI may be 0.25 millisecond (ms), 0.5 ms, 1 ms, or other TTI. For example, as shown in **Figure 2****,** a configuration 251 may have a TTI of 1 ms, and a configuration 253 may have a TTI of 0.5 ms. A round trip time (RTT), or a processing delay period, for a configuration supported by a UE may be a multiple of the supported TTI, and may be based on a time interval before an acknowledgement or negative acknowledgement is received after the data is transferred. For example, as shown in **Figure 2****,** a UE may have a RTT 261 of 8 ms for the configuration 251 having a TTI of 1 ms, and may have a RTT 263 of 4 ms for the configuration 253 having a TTI of 0.5 ms.

In embodiments, a medium, e.g., the medium 123, may include the downlink 122 and the uplink 124. Through the uplink 124, the UE 103 may cause a request to be transmitted for an uplink grant for a first physical resource of a first configuration associated with a first service. Through the downlink 122, the eNB 101 may transmit and the UE 103 may identify, an uplink grant for the first physical resource of the first configuration associated with the first service. For example, the first physical resource of the first configuration granted to the UE 103 may be a logical channel of the uplink 124 of a configuration with a TTI of 0.5 ms, which is to be used for the first service of the first priority, e.g., an eMBB service or an mMTC service.

In addition, a UE, e.g., the UE 103, may identify data associated with a second service having a second priority, wherein the data is related to a second physical resource of a second configuration, and the second priority is different from the first priority. For example, the UE 103 may identify data associated a second service, e.g., an URLLC service, which may be related, e.g., intended to be transmitted by a logic channel of the uplink 124 of a configuration with a TTI of 0.25 ms.

In embodiments, a UE, e.g., the UE 103, may cause, based on a threshold condition associated with the first configuration, the second configuration, the first priority, or the second priority, the data associated with the second service to be transmitted by the first physical resource of the first configuration associated with the first service. For example, a threshold between the first configuration, the second configuration, the first priority, or the second priority may be a relationship that the second TTI has a length that is larger than or equal to half a length of the first TTI. In embodiments, the UE 103 may cause data associated with the URLLC service, which may be intended to be transmitted by a logic channel of the uplink 124 of a configuration with a second TTI of 0.25 ms, to be transmitted by the available logic channel of the uplink 124 of a configuration with a first TTI of 0.5 ms that may be granted for a first service of the first priority, e.g., an eMBB service or an mMTC service. In the instant example, the second TTI of 0.25 is equal to half a length of the first TTI of 0.5 ms.

In embodiments, the medium 123 may be a band in any frequency range (in particular 0 Hz - 300 GHz), such as for example unlicensed bands (as the 5GHz ISM band) or the licensed-by-rule approach which is applied by the FCC (Federal Communications Commission) to the 3.5 GHz Spectrum Access System (SAS) General Authorized Access (GAA) tier, etc. Some targets for future application may include the 28, 37 and 60 GHz bands. In particular, techniques that have been designed for unlicensed bands may be used straightforwardly (only adapting the channel access parameters as described in this document) but also various other systems can be used following a suitable adaptation (see for example the modification of 3GPP LTE to introduce LAA in the 5GHz ISM band).

In embodiments, the wireless network 100 may include in particular the following: LTE and Long Term Evolution-Advanced (LTE-A) and LTE-Advanced Pro, 5th Generation (5G) communication systems, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (e.g. UMTS (Universal Mobile Telecommunications System), FOMA (Freedom of Multimedia Access), 3GPP LTE, 3GPP LTE Advanced (Long Term Evolution Advanced)), 3GPP LTE-Advanced Pro, CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 14), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP LTE Extra, LTE Licensed-Assisted Access (LAA), UTRA (UMTS Terrestrial Radio Access), E-UTRA (Evolved UMTS Terrestrial Radio Access), LTE Advanced (4G) (Long Term Evolution Advanced (4th Generation)), ETSI OneM2M, IoT (Internet of things), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), DAMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as also referred to as 3GPP Generic Access Network, or GAN standard)), Wireless Gigabit Alliance (WiGig) standard, mmWave standards in general (wireless systems operating at 10-90 GHz and above such as WiGig, IEEE 802.11ad, IEEE 802.11ay, etc.), etc. It is understood that such exemplary scenarios are demonstrative in nature, and accordingly may be similarly applied to other mobile communication technologies and standards.

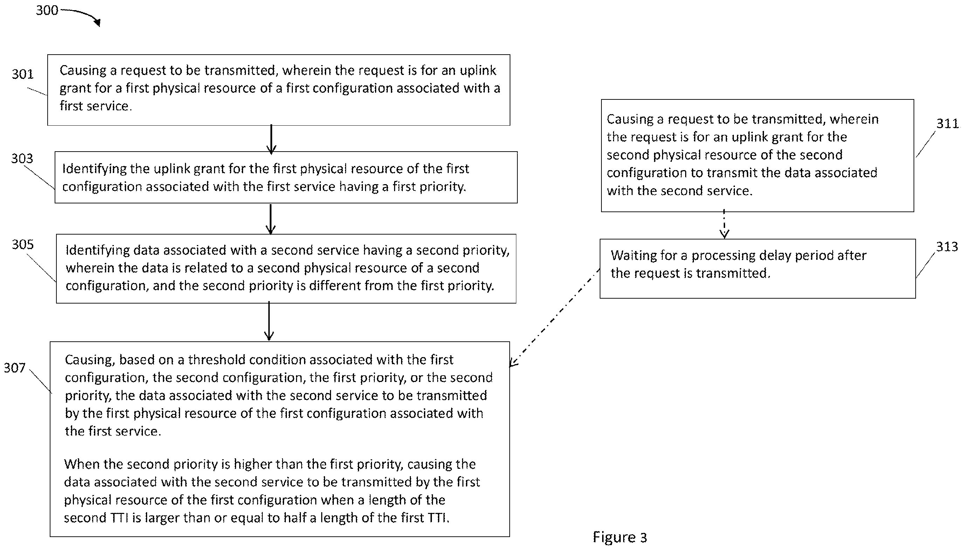

**Figure** 3 illustrates an example operation flow 300 for a UE, provided with a first physical resource of a first configuration associated with a first service having a first priority, to cause data associated with a second service with a second priority to be transmitted by the first physical resource, in accordance with various embodiments. In embodiments, the operation flow 300 may be performed by the UE 103, where the UE 103 may be provided with a first physical resource of the configuration 151 associated with the service 141 having a first priority, to cause data associated with the service 143 with a second priority to be transmitted by the first physical resource.

For example, the UE 103 may support an eMBB service, an mMTC service, and an URLLC service, where the URLLC service may have a higher priority than a priority of the eMBB service or the mMTC service. Based on the operation flow 300, the UE 103 may be granted a logical channel of the uplink 124 of a configuration with a TTI of 0.5 ms for data associated with an eMBB service or an mMTC service. The UE 103 may receive data associated with an URLLC service intended to be transmitted by a logic channel of the uplink 124 of a configuration with a TTI of 0.25 ms. Based on a threshold relationship between the TTI of 0.5 ms and the TTI of 0.25 ms, and the higher priority the URLLC service may have, the UE 103 may cause data associated with the URLLC service to be transmitted by the logical channel granted to transmit data associated with an eMBB service or an mMTC service, so that data associated with higher priority service, the URLLC service, may not need to wait for a logical channel of its own. However, when a condition for a threshold relation between the first configuration, the second configuration, the first priority, or the second priority is not met, the data associated with higher priority service, for example, data associated with the URLLC service, may wait for a logical channel granted specifically for transmitting data associated with the URLLC service.

In addition, based on the operation flow 300, the UE 103 may be granted a logical channel of the uplink 124 of a configuration with a TTI of 0.25 ms for data associated with an URLLC service. The UE 103 may receive data associated with an eMBB service or an mMTC service intended to be transmitted by a logic channel of the uplink 124 of a configuration with a TTI of 0.5 ms. When there is no data associated with the URLLC service available for transmission by the granted logical channel, or when data associated with the URLLC service available for transmission has a size smaller than a size of the granted logical channel, the UE 103 may cause data associated with the eMBB service or the mMTC service to be transmitted by the logical channel granted to transmit data associated with URLLC service. Accordingly, based on the operation flow 300, the UE 103 may multiplex together data associated with URLLC service and data associated with the eMBB service or the mMTC service to be transmitted in a logical channel granted to transmit data associated with URLLC service.

The operation flow 300 may include, at 301, causing a request to be transmitted, wherein the request is for an uplink grant for a first physical resource of a first configuration associated with a first service. In some embodiments, at 301, the UE 103 may cause a request to be transmitted, where the request is for an uplink grant for a first physical resource of a first configuration e.g., the configuration 151, associated with a first service, e.g., the service 141, which may be an eMBB service, an mMTC service, or an URLLC service.

The operation flow 300 may further include, at 303, identifying the uplink grant for the first physical resource of the first configuration associated with the first service having a first priority. In some embodiments, at 303, the UE 103 may identify the uplink grant for the first physical resource of the first configuration, e.g., the configuration 151, associated with the first service, e.g., the service 141, having a first priority. In some embodiments, the first physical resource may be a logical channel of the uplink 124 of a configuration with a TTI of 0.5 ms, which is to be used for the first service of the first priority, e.g., the service 141 that may be an eMBB service or an mMTC service. In some other embodiments, the first physical resource may be a logical channel of the uplink 124 of a configuration with a TTI of 0.25 ms, which may be used for the first service of the first priority, e.g., an URLLC service.

The operation flow 300 may further include, at 305, identifying data associated with a second service having a second priority, wherein the data is related to a second physical resource of a second configuration, and the second priority is different from the first priority. In some embodiments, at 305, when the UE 103 may be provided an uplink grant for an eMBB service or an mMTC service, the UE 103 may identify or receive data associated with an URLLC service to be transmitted. In some other embodiments, when the UE 103 may be granted the logical channel for an URLLC service, the UE 103 may identify or receive data associated with an eMBB service or an mMTC service to be transmitted.

The operation flow 300 may further include, at 307, causing, based on a threshold condition associated with the first configuration, the second configuration, the first priority, or the second priority, the data associated with the second service to be transmitted by the first physical resource of the first configuration associated with the first service. In embodiments, the threshold relation may be determined by the first configuration, the second configuration, the first priority, or the second priority, and the UE 103 may take different actions based on whether the threshold relation is satisfied.

In some embodiments, when the first priority may be higher than the second priority, the threshold relation may include no data associated with the first service being available for transmission by the first physical resource of the first configuration, or data associated with the first service available for transmission having a size smaller than a size of the first physical resource of the first configuration. In some embodiments, when the UE 103 may be granted the logical channel for an URLLC service, the UE 103 may cause the data associated with an eMBB service or an mMTC service to be transmitted by the granted logical channel for the URLLC service when data associated with the URLLC service available for transmission has a size smaller than a size of the logical channel for an URLLC service, or no data associated with the URLLC service is available for transmission on the logical channel for the URLLC service.

In some embodiments, when the second priority may be higher than the first priority, the operation flow 300 may include, at 307, causing the data associated with the second service to be transmitted by the first physical resource of the first configuration when a length of the second TTI is larger than or equal to half a length of the first TTI. In some embodiments, when the UE 103 may be granted the logical channel for an eMBB service or an mMTC service, the UE 103 may identify or receive data associated with the URLLC service to be transmitted, where the URLLC service may have higher priority than the eMBB service or the mMTC service. The UE 103 may cause the data associated with the URLLC service to be transmitted by the granted logical channel when the second TTI has a length that is larger than or equal to half a length of the first TTI.

In embodiments, the operation flow 300 may further optionally include, at 311, causing a request to be transmitted, wherein the request is for an uplink grant for the second physical resource of the second configuration to transmit the data associated with the second service. The operations at 311 may be independent from operations at 301, 303, or 305. The UE 103 may cause a request for the uplink grant for the second physical resource of the second configuration to be transmitted after the data associated with the second service is received or identified at 305. Alternatively, the UE 103 may cause a request for the uplink grant for the second physical resource of the second configuration to be transmitted even before the data associated with the second service is received or identified at 305. The UE 103 may transmit the request for the uplink grant for the second physical resource of the second configuration using a procedure specific to the second service.

In embodiments, the operation flow 300 may further optionally include, at 313, waiting for a processing delay period after the request is transmitted. For example, if the UE 103 may have transmitted the request for the uplink grant for the second physical resource of the second configuration before the data associated with the second service is received or identified at 305, the UE 103 may wait for a processing delay period after the request is transmitted at 313, before causing the data associated with the second service to be transmitted by the first physical resource of the first configuration associated with the first service, at 307.

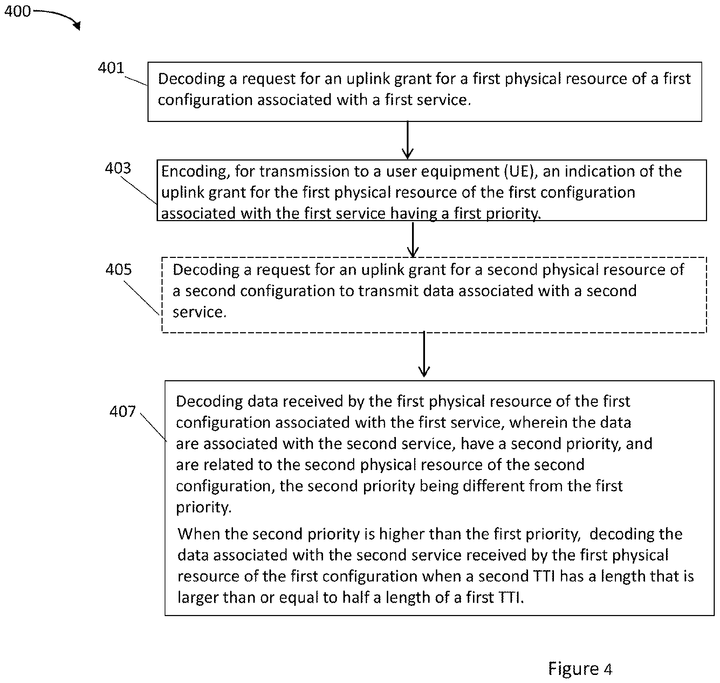

**Figure 4** illustrates an example operation flow 400 for an eNB, while granting a first physical resource of a first configuration associated with a first service having a first priority, to decode data associated with a second service received by the first physical resource, in accordance with various embodiments. In embodiments, the operation flow 400 may be performed by the eNB 101, where the eNB 101 may grant to the UE 103 a first physical resource of the configuration 151 associated with the service 141 having a first priority, and may decode data associated with a second service 143 received by the first physical resource.

The operation flow 400 may include, at 401, decoding a request for an uplink grant for a first physical resource of a first configuration associated with a first service. The first physical resource of the first configuration associated with the first service may include a logic channel with an identification mapped to the first configuration associated with the first service. In some embodiments, at 401, the eNB 101 may receive and decode a request for an uplink grant for a first physical resource of a first configuration, e.g., the configuration 151, associated with a first service having a first priority, e.g., the service 141, which may be an eMBB service, an mMTC service, or an URLLC service. In some embodiments, the first physical resource may be a logical channel of the uplink 124 of a configuration with a TTI of 0.5 ms, which may be used for the first service of the first priority, e.g., the service 141 that may be an eMBB service or an mMTC service. In some other embodiments, the first physical resource may be a logical channel of the uplink 124 of a configuration with a TTI of 0.25 ms, which may be used for the first service of the first priority, e.g., an URLLC service.

The operation flow 400 may further include, at 403, encoding, for transmission to a UE, an indication of the uplink grant for the first physical resource of the first configuration associated with the first service having a first priority. In some embodiments, at 403, the eNB 101 may encode, for transmission to the UE 103, an indication of the uplink grant for the first physical resource of the first configuration associated with the first service having a first priority.

The operation flow 400 may further optionally include, at 405, decoding a request for an uplink grant for a second physical resource of a second configuration to transmit data associated with a second service. Such a request for the uplink grant for a second physical resource of a second configuration may be received and decoded by a procedure specific to the second service. In some embodiments, the second physical resource may be a logical channel of the uplink 124 of a configuration with a TTI of 0.25 ms, which is to be used for the second service of the second priority, e.g., an URLLC service. In some other embodiments, the second physical resource may be a logical channel of the uplink 124 of a configuration with a TTI of 0.5 ms, which is to be used for the second service of the second priority, e.g., the service 143 that may be an eMBB service or an mMTC service.

The operation flow 400 may further include, at 407, decoding data received by the first physical resource of the first configuration associated with the first service, wherein the data are associated with the second service, have a second priority, and are related to the second physical resource of the second configuration, the second priority being different from the first priority. In some embodiments, the first physical resource of the first configuration may include a first transmission time interval (TTI), the second physical resource of the second configuration may include a second TTI, the first priority may be lower than the second priority, and the second TTI has a length that is larger than half a length of the first TTI. For example, the first physical resource may be a logical channel of the uplink 124 of a configuration with a TTI of 0.5 ms, which is to be used for the first service of the first priority, e.g., the service 141 that may be an eMBB service or an mMTC service. The second physical resource may be a logical channel of the uplink 124 of a configuration with a TTI of 0.25 ms, which is to be used for the second service of the second priority, e.g., an URLLC service. The eNB 101 may receive data associated with the second service by a logical channel of the uplink 124 of a configuration with a TTI of 0.5 ms associated with an eMBB service or an mMTC service, wherein the data associated with the second service may be related or intended to be transmitted by a logical channel of the uplink 124 of a configuration with a TTI of 0.25 ms, which is to be used for the second service of the second priority, e.g., an URLLC service.

The operation flow 400 may include, at 407, when the second priority is higher than the first priority, decoding the data associated with the second service received by the first physical resource of the first configuration when a second TTI has a length that is larger than or equal to half a length of a first TTI. In some embodiments, at 407, when the eNB 101 may receive the data associated with the second service by the first physical resource of the first configuration when the second TTI has a length that is larger than or equal to half a length of the first TTI.

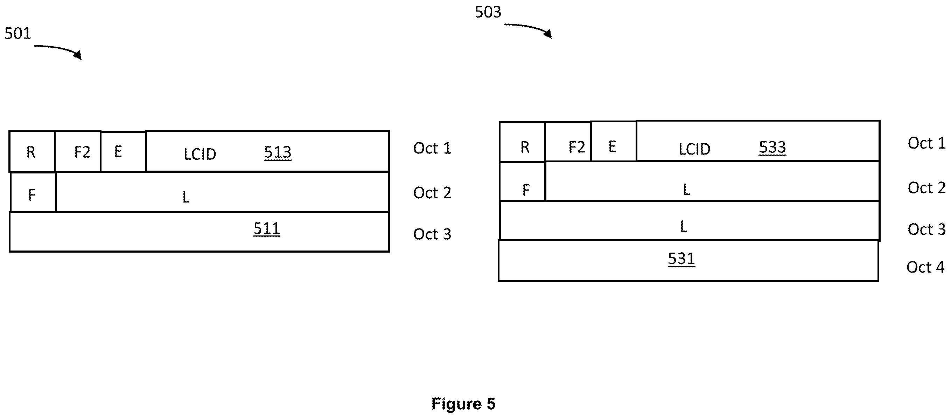

**Figure 5** illustrates an example medium access control (MAC) sub-header design 501 or 503 to multiplex data associated with a first service having a first priority and data associated with a second service having a second priority, in accordance with various embodiments. The MAC sub-header design 501 or the MAC sub-header design 503 may be used by the UE 103 to transmit multiplexed data associated with a first service having a first priority and data associated with a second service having a second priority. In embodiments, a MAC layer protocol data unit (PDU) may include multiple data units as a result of packet aggregation, where data unit from multiple services, e.g., an eMBB service, an mMTC service, or an URLLC service, may be included in one PDU. The aggregation or multiplexing of data unit from multiple services may be performed in different ways, by using different logical channel identification (ID), different bearer ID, different priority class ID, different TTI ID, or different physical layer (PHY) configuration profile ID.

In some embodiments, the MAC sub-header design 501 may include a reserved bit R. When the bit R is set to one, 8 bits of service specific identity 511 may be presented after the L field in the MAC sub-header, where the service specific identity 511 may indicate the data carried in the L field, for data load, may be for an eMBB service, an mMTC service, or an URLLC service. In some other embodiments, the MAC sub-header design 501 may include a logical channel ID (LCID) 513. In the legacy LTE specification, a LCID may range from 00001 to 01010 in the MAC sub-header. The LCID 513 included in the MAC sub-header design 501 may be expanded to have six bits so that more values of LCID may be defined. As a consequence, different radio bearer and/or different services with different TTI may be mapped to a different LCID for the LCID 513.

In some embodiments, the MAC sub-header design 503 may be similar to the MAC sub-header design 501, except that the MAC sub-header design 503 may include larger L field. The MAC sub-header design 503 may include a reserved bit R. When the bit R is set to one, 8 bits of service specific identity 531 may be presented after the L field in the MAC sub-header, where the service specific identity 531 may indicate that the data carried in the L field may be for an eMBB service, an mMTC service, or an URLLC service. In some other embodiments, the MAC sub-header design 503 may include a logical channel ID (LCID) 533. The LCID 533 included in the MAC sub-header design 503 may include six bits so that different radio bearer and/or different services with different TTI may be mapped to a different LCID for the LCID 533.

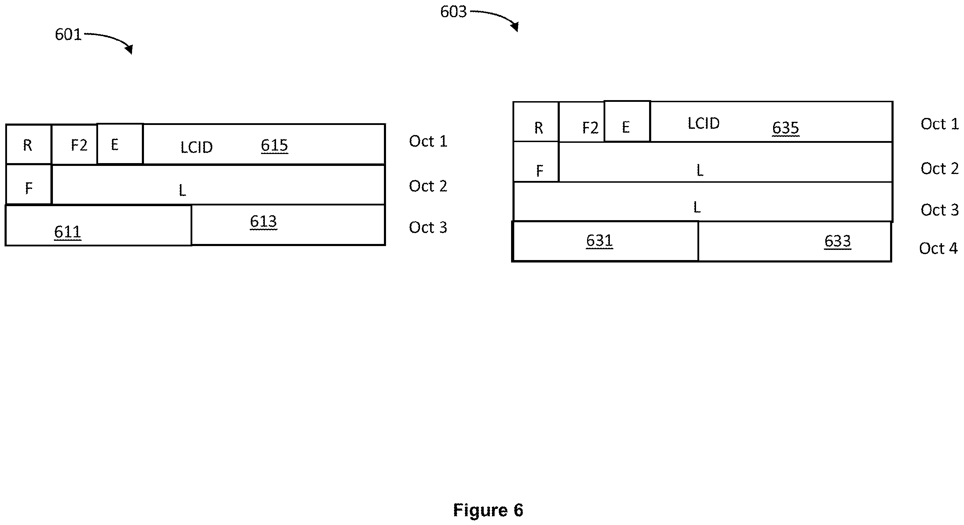

**Figure 6** illustrates another example MAC sub-header design 601 or 603 to multiplex data associated with a first service having a first priority and data associated with a second service having a second priority, in accordance with various embodiments. The MAC sub-header design 601 or the MAC sub-header design 603 may be used by the UE 103 to transmit multiplexed data associated with a first service having a first priority and data associated with a second service having a second priority.

In some embodiments, the MAC sub-header design 601 may include a 3-bit service specific ID 611 and a channel ID 613, in addition to a LCID 615. The service specific ID 611 may indicate the data carried in the L field, for data load, may be mapped to a priority class ID of the service, a TTI configuration indicator of the service, or a PHY configuration profile ID of the service such as an eMBB service, an mMTC service, or an URLLC service. The LCID 615 included in the MAC sub-header design 601 may include six bits. In some embodiments, the service specific ID 611 and a channel ID 613 may be used when the LCID 615 may be a reserved LCID, e.g., 10100.

In some embodiments, the MAC sub-header design 603 may be similar to the MAC sub-header design 601, except that the MAC sub-header design 603 may include larger L field. In some embodiments, the MAC sub-header design 603 may include a 3-bit service specific ID 631 and a channel ID 633, in addition to a LCID 635. The service specific ID 631 may indicate the data carried in the L field, for data load, may be mapped to a priority class ID of the service, a TTI configuration indicator of the service, or a PHY configuration profile ID of the service such as an eMBB service, an mMTC service, or an URLLC service. The LCID 635 included in the MAC sub-header design 603 may include six bits. In some embodiments, the service specific ID 631 and a channel ID 633 may be used when the LCID 635 may be a reserved LCID, e.g., 10100.

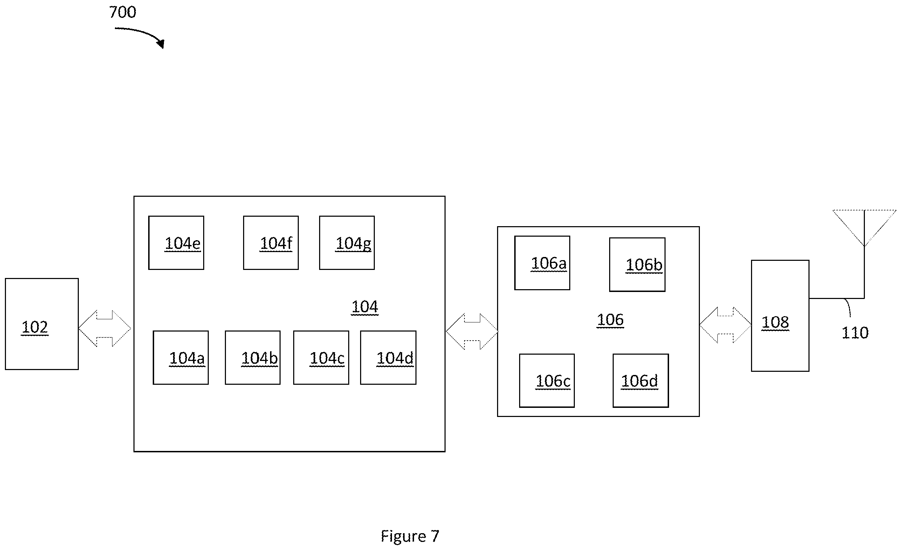

**Figure 7** illustrates a block diagram of an implementation 700 for eNBs, gNodeB, and/or UEs, in accordance with various embodiments. In one embodiment, using any suitably configured hardware and/or software, example components of an electronic device 700 may implement an eNB, or a UE of the wireless network 100 as shown in Figure 1, e.g., the UE 103, the UE 105, the UE 107, the UE 109, or the eNB 101. In some embodiments, the electronic device 700 may include application circuitry 102, baseband circuitry 104, radio frequency (RF) circuitry 106, front-end module (FEM) circuitry 108, and one or more antennas 110, coupled together at least as shown. In embodiments where the electronic device 700 is implemented in or by an eNB, or a UE, the electronic device 700 may also include network interface circuitry (not shown) for communicating over a wired interface (for example, an X2 interface, an S1 interface, and the like).

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

The application circuitry 102 may include one or more application processors. For example, the application circuitry 102 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 104 may include circuitry such as, but not limited to, one or more single-core or multi-core processors. The baseband circuitry 104 may include one or more baseband processors and/or control logic to process baseband signals received from a receive signal path of the RF circuitry 106 and to generate baseband signals for a transmit signal path of the RF circuitry 106. Baseband processing circuity 104 may interface with the application circuitry 102 for generation and processing of the baseband signals and for controlling operations of the RF circuitry 106. For example, in some embodiments, the baseband circuitry 104 may include a second generation (2G) baseband processor 104a, third generation (3G) baseband processor 104b, fourth generation (4G) baseband processor 104c, and/or other baseband processor(s) 104d for other existing generations, generations in development or to be developed in the future (e.g., fifth generation (5G), 6G, etc.). The baseband circuitry 104 (e.g., one or more of baseband processors 104a-d) may handle various radio control functions that enable communication with one or more radio networks via the RF circuitry 106. The radio control functions may include, but are not limited to, signal modulation/demodulation, encoding/decoding, radio frequency shifting, etc. In some embodiments, modulation/demodulation circuitry of the baseband circuitry 104 may include Fast-Fourier Transform (FFT), precoding, and/or constellation mapping/demapping functionality. In some embodiments, encoding/decoding circuitry of the baseband circuitry 104 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 104 may include elements of a protocol stack such as, for example, elements of an D2D or evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 104e of the baseband circuitry 104 may be configured to run elements of the protocol stack for signaling of the PHY, MAC, RLC, PDCP and/or RRC layers. In some embodiments, the baseband circuitry may include one or more audio digital signal processor(s) (DSP) 104f. The audio DSP(s) 104f may be include elements for compression/decompression and echo cancellation and may include other suitable processing elements in other embodiments.

The baseband circuitry 104 may further include memory/storage 104g. The memory/storage 104g may be used to load and store data and/or instructions for operations performed by the processors of the baseband circuitry 104. Memory/storage for one embodiment may include any combination of suitable volatile memory and/or non-volatile memory. The memory/storage 104g may include any combination of various levels of memory/storage including, but not limited to, read-only memory (ROM) having embedded software instructions (e.g., firmware), random access memory (e.g., dynamic random access memory (DRAM)), cache, buffers, etc. The memory/storage 104g may be shared among the various processors or dedicated to particular processors.

Components of the baseband circuitry may be suitably combined in a single chip, a single chipset, or disposed on a same circuit board in some embodiments. In some embodiments, some or all of the constituent components of the baseband circuitry 104 and the application circuitry 102 may be implemented together such as, for example, on a system on a chip (SOC).

In some embodiments, the baseband circuitry 104 may provide for communication compatible with one or more radio technologies. For example, in some embodiments, the baseband circuitry 104 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 104 is configured to support radio communications of more than one wireless protocol may be referred to as multi-mode baseband circuitry.

RF circuitry 106 may enable communication with wireless networks using modulated electromagnetic radiation through a non-solid medium. In various embodiments, the RF circuitry 106 may include switches, filters, amplifiers, etc. to facilitate the communication with the wireless network. RF circuitry 106 may include a receive signal path which may include circuitry to down-convert RF signals received from the FEM circuitry 108 and provide baseband signals to the baseband circuitry 104. RF circuitry 106 may also include a transmit signal path which may include circuitry to up-convert baseband signals provided by the baseband circuitry 104 and provide RF output signals to the FEM circuitry 108 for transmission.

In some embodiments, the RF circuitry 106 may include a receive signal path and a transmit signal path. The receive signal path of the RF circuitry 106 may include mixer circuitry 106a, amplifier circuitry 106b and filter circuitry 106c. The transmit signal path of the RF circuitry 106 may include filter circuitry 106c and mixer circuitry 106a. RF circuitry 106 may also include synthesizer circuitry 106d for synthesizing a frequency for use by the mixer circuitry 106a of the receive signal path and the transmit signal path. In some embodiments, the mixer circuitry 106a of the receive signal path may be configured to down-convert RF signals received from the FEM circuitry 108 based on the synthesized frequency provided by synthesizer circuitry 106d. The amplifier circuitry 106b may be configured to amplify the down-converted signals and the filter circuitry 106c may be a low-pass filter (LPF) or band-pass filter (BPF) configured to remove unwanted signals from the down-converted signals to generate output baseband signals. Output baseband signals may be provided to the baseband circuitry 104 for further processing. In some embodiments, the output baseband signals may be zero-frequency baseband signals, although this is not a requirement. In some embodiments, mixer circuitry 106a of the receive signal path may comprise passive mixers, although the scope of the embodiments is not limited in this respect.

In some embodiments, the mixer circuitry 106a of the transmit signal path may be configured to up-convert input baseband signals based on the synthesized frequency provided by the synthesizer circuitry 106d to generate RF output signals for the FEM circuitry 108. The baseband signals may be provided by the baseband circuitry 104 and may be filtered by filter circuitry 106c. The filter circuitry 106c may include a low-pass filter (LPF), although the scope of the embodiments is not limited in this respect.

In some embodiments, the mixer circuitry 106a of the receive signal path and the mixer circuitry 106a of the transmit signal path may include two or more mixers and may be arranged for quadrature downconversion and/or upconversion respectively. In some embodiments, the mixer circuitry 106a of the receive signal path and the mixer circuitry 106a of the transmit signal path may include two or more mixers and may be arranged for image rejection (e.g., Hartley image rejection). In some embodiments, the mixer circuitry 106a of the receive signal path and the mixer circuitry 106a may be arranged for direct downconversion and/or direct upconversion, respectively. In some embodiments, the mixer circuitry 106a of the receive signal path and the mixer circuitry 106a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 106 may include analog-to-digital converter (ADC) and digital-to-analog converter (DAC) circuitry and the baseband circuitry 104 may include a digital baseband interface to communicate with the RF circuitry 106.

In some embodiments, the synthesizer circuitry 106d may be a fractional-N synthesizer or a fractional N/N+1 synthesizer, although the scope of the embodiments is not limited in this respect as other types of frequency synthesizers may be suitable. For example, synthesizer circuitry 106d may be a delta-sigma synthesizer, a frequency multiplier, or a synthesizer comprising a phase-locked loop with a frequency divider.

The synthesizer circuitry 106d may be configured to synthesize an output frequency for use by the mixer circuitry 106a of the RF circuitry 106 based on a frequency input and a divider control input. In some embodiments, the synthesizer circuitry 106d may be a fractional N/N+1 synthesizer.

In some embodiments, frequency input may be provided by a voltage controlled oscillator (VCO), although that is not a requirement. Divider control input may be provided by either the baseband circuitry 104 or the applications processor 102 depending on the desired output frequency. In some embodiments, a divider control input (e.g., N) may be determined from a look-up table based on a channel indicated by the applications processor 102.

Synthesizer circuitry 106d of the RF circuitry 106 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 106d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 106 may include an IQ/polar converter.

FEM circuitry 108 may include a receive signal path which may include circuitry configured to operate on RF signals received from one or more antennas 110, amplify the received signals and provide the amplified versions of the received signals to the RF circuitry 106 for further processing. FEM circuitry 108 may also include a transmit signal path which may include circuitry configured to amplify signals for transmission provided by the RF circuitry 106 for transmission by one or more of the one or more antennas 110.

In some embodiments, the FEM circuitry 108 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 106). The transmit signal path of the FEM circuitry 108 may include a power amplifier (PA) to amplify input RF signals (e.g., provided by RF circuitry 106), and one or more filters to generate RF signals for subsequent transmission (e.g., by one or more of the one or more antennas 110).

In some embodiments, the implementation 700 may include additional elements such as, for example, a display, a camera, one or more sensors, and/or interface circuitry (for example, input/output (I/O) interfaces or buses) (not shown). In embodiments where the electronic device is implemented in or by an eNB, the implementation 700 may include network interface circuitry. The network interface circuitry may be one or more computer hardware components that the connect the implementation 700 to one or more network elements, such as one or more servers within a core network or one or more other eNBs via a wired connection. To this end, the network interface circuitry may include one or more dedicated processors and/or field programmable gate arrays (FPGAs) to communicate using one or more network communications protocols such as X2 application protocol (AP), S1 AP, Stream Control Transmission Protocol (SCTP), Ethernet, Point-to-Point (PPP), Fiber Distributed Data Interface (FDDI), and/or any other suitable network communications protocols.

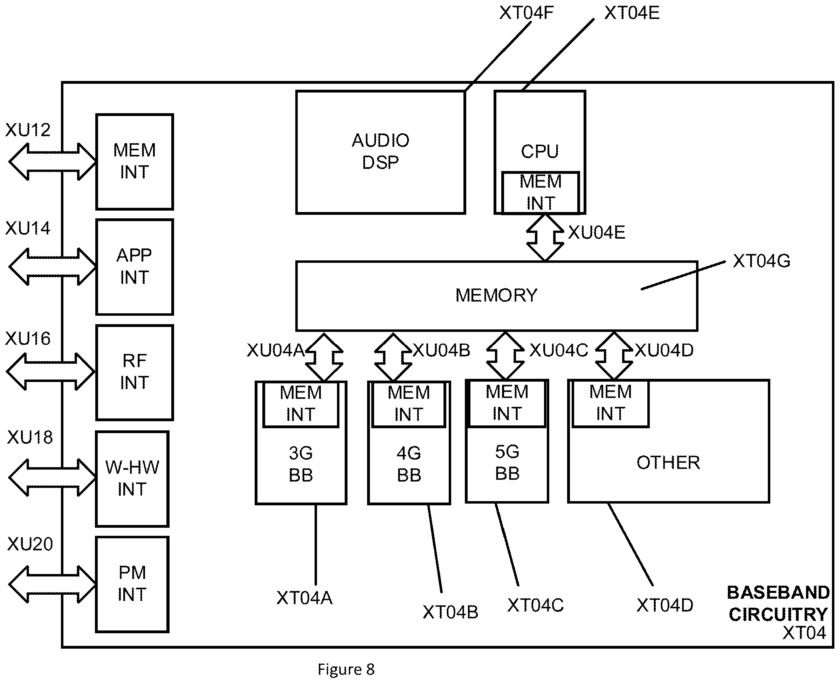

**Figure** 8 illustrates interfaces of baseband circuitry XT04 as a part of an implementation for eNBs, gNodeB, and/or UEs, in accordance with various embodiments. The baseband circuitry XT04 may be similar to the baseband circuitry 104 of the implementation 700 for eNBs, gNodeB, and/or UEs, as shown in Figure 7, which may comprise processors 104a-104e and a memory 104g utilized by said processors. In one embodiment, using any suitably configured hardware and/or software, example components of the baseband circuitry XT04 may implement an eNB, or a UE of the wireless network 100 as shown in Figure 1, e.g., the UE 103, the UE 105, the UE 107, the UE 109, or the eNB 101. Each of the processors 104a-104e may include a memory interface, XU04A-XU04E, respectively, to send/receive data to/from the memory 104g. In some embodiments, the memory 104g may store information about a threshold condition, which may be associated with the first configuration, the second configuration, the first priority, or the second priority. The threshold condition may be used by processing circuitry, e.g., processors 104a-104e, to cause, based on the threshold condition, the data associated with the second service to be transmitted by the first physical resource of the first configuration associated with the first service.

The baseband circuitry 104 may further include one or more interfaces to communicatively couple to other circuitries/devices, such as a memory interface XU12 (e.g., an interface to send/receive data to/from memory external to the baseband circuitry XT04), an application circuitry interface XU14 (e.g., an interface to send/receive data to/from the application circuitry 102 of Figure 7), an RF circuitry interface XU16 (e.g., an interface to send/receive data to/from RF circuitry 106 of Figure 7), a wireless hardware connectivity interface XU18 (e.g., an interface to send/receive data to/from Near Field Communication (NFC) components, Bluetooth® components (e.g., Bluetooth® Low Energy), Wi-Fi® components, and other communication components), and a power management interface XU20 (e.g., an interface to send/receive power or control signals to/from the PMC XT12.

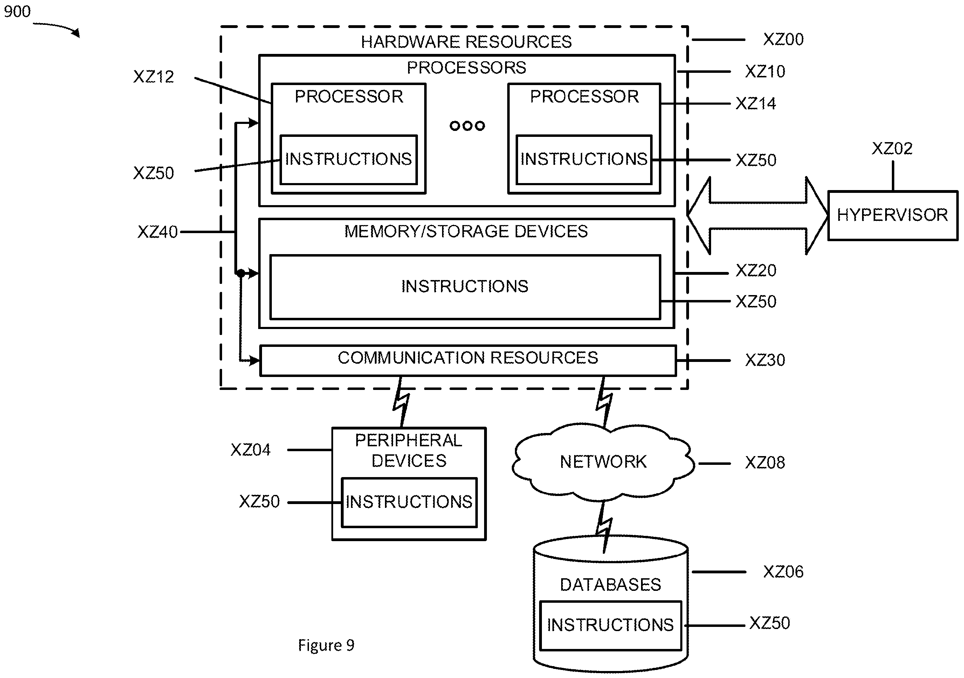

**Figure 9** illustrates a block diagram 900 illustrating components able to read instructions from a machine-readable or computer-readable medium (e.g., a non-transitory machine-readable storage medium) and perform any one or more of the methodologies discussed herein, in accordance with various embodiments.

Specifically, Figure 9 shows a diagrammatic representation of hardware resources XZ00 including one or more processors (or processor cores) XZ10, one or more memory/storage devices XZ20, and one or more communication resources XZ30, each of which may be communicatively coupled via a bus XZ40. For embodiments where node virtualization is utilized, a hypervisor XZ02 may be executed to provide an execution environment for one or more network slices/sub-slices to utilize the hardware resources XZ00

The processors XZ10 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor XZ12 and a processor XZ14.

The memory/storage devices XZ20 may include main memory, disk storage, or any suitable combination thereof. The memory/storage devices XZ20 may include, but are not limited to any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources XZ30 may include interconnection or network interface components or other suitable devices to communicate with one or more peripheral devices XZ04 or one or more databases XZ06 via a network XZ08. For example, the communication resources XZ30 may include wired communication components (e.g., for coupling via a Universal Serial Bus (USB)), cellular communication components, NFC components, Bluetooth® components (e.g., Bluetooth® Low Energy), Wi-Fi® components, and other communication components.

Instructions XZ50 may comprise software, a program, an application, an applet, an app, or other executable code for causing at least any of the processors XZ10 to perform any one or more of the methodologies discussed herein. For example, instructions XZ50 may be configured to enable a device, e.g., the UE 103, the UE 105, the UE 107, the UE 109, as shown in Figure 1, in response to execution of the instructions XZ50, to implement (aspects of) any of the operation flows or elements described throughout this disclosure related to a UE, e.g., Figure 3, when provided with a first physical resource of a first configuration associated with a first service having a first priority, to cause data associated with a second service with a second priority to be transmitted by the first physical resource, in accordance with various embodiments. Similarly, instructions XZ50 may be configured to enable a device, for example, the eNB 101 as shown in Figure 1, in response to execution of the instructions XZ50, to implement (aspects of) any of the operation flows or elements described throughout this disclosure related to an eNB, e.g., Figure 4, while granting a first physical resource of a first configuration associated with a first service having a first priority, to decode data associated with a second service by the first physical resource, in accordance with various embodiments. In some embodiments, the instructions XZ50 may reside, completely or partially, within at least one of the processors XZ10 (e.g., within the processor's cache memory), the memory/storage devices XZ20, or any suitable combination thereof. Furthermore, any portion of the instructions XZ50 may be transferred to the hardware resources XZ00 from any combination of the peripheral devices XZ04 or the databases XZ06. Accordingly, the memory of processors XZ10, the memory/storage devices XZ20, the peripheral devices XZ04, and the databases XZ06 are examples of computer-readable and machine-readable media.

The present disclosure is described with reference to flowchart illustrations or block diagrams of processes, apparatus (systems) and computer program products according to embodiments of the disclosure. It will be understood that each block of the flowchart illustrations or block diagrams, and combinations of blocks in the flowchart illustrations or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means that implement the function/act specified in the flowchart or block diagram block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide processes for implementing the functions/acts specified in the flowchart or block diagram block or blocks.

## Claims

1. An apparatus to be used in a user equipment, UE, (103) in a mobile communication network to communicate with an evolved Node B, eNB, or a next generation Node B, gNB, (101) comprising:
a memory (104g) to store information about a threshold condition; and
processing circuitry (102, 104, 106, 108) to:
identify an uplink grant for a first physical resource of a first configuration (251) associated with a first service having a first priority, the first physical resource of the first configuration (251) comprising a first transmission time interval, TTI;
identify data associated with a second service having a second priority, wherein the data is related to a second physical resource of a second configuration (253), the second physical resource of the second configuration (253) comprising a second TTI, and the first priority is lower than the second priority; and
determine whether the threshold condition is met, wherein the threshold condition is associated with the first configuration (251), the second configuration (253), the first priority, or the second priority, and wherein the threshold condition is that a length of the second TTI is larger than or equal to half a length of the first TTI; and
cause, based on the threshold condition, the data associated with the second service to be transmitted (301) by the first physical resource of the first configuration (251) associated with the first service when the length of the second TTI is larger than or equal to half the length of the first TTI.

2. The apparatus of claim 1, wherein the length of the second TTI is less than the length of the first TTI.

3. The apparatus of claim 1, wherein the length of the second TTI is equal to half the length of the first TTI.

4. The apparatus of claim 1, wherein the processing circuitry (102, 104, 106, 108) is further to:
cause a request to be transmitted, wherein the request is for an uplink grant for the second physical resource of the second configuration (253) to transmit the data associated with the second service; and
wait for a processing delay period after the request is transmitted before causing the data associated with the second service to be transmitted by the first physical resource of the first configuration (251) associated with the first service.

5. The apparatus of claim 4, wherein the request for the uplink grant for the second physical resource of the second configuration (253) is to be transmitted after identifying the data associated with the second service.

6. The apparatus of any one of claims 1-4, wherein the first service is an enhanced mobile broad-band, eMBB, service or a massive machine type communications, mMTC, service, and the second service is an ultra reliable and low latency communications, URLLC, service.

7. A computer implemented method to be used in a user equipment, UE, (103) in a mobile communication network to communicate with an evolvedNode B, eNB, or a next generation Node B, gNB, (101) comprising:
identifying an uplink grant for a first physical resource of a first configuration (251) associated with a first service having a first priority, the first physical resource of the first configuration (251) comprising a first transmission time interval, TTI;
identifying data associated with a second service having a second priority, wherein the data is related to a second physical resource of a second configuration (253), the second physical resource of the second configuration (253) comprising a second TTI, and the first priority is lower than the second priority; and
determining whether a threshold condition is met, wherein the threshold condition is associated with the first configuration (251), the second configuration (253), the first priority, or the second priority, and wherein the threshold condition is that a length of the second TTI is larger than or equal to half a length of the first TTI; and
causing, based on the threshold condition, the data associated with the second service to be transmitted (301) by the first physical resource of the first configuration (251) associated with the first service when the length of the second TTI is larger than or equal to half the length of the first TTI.

8. The method of claim 7, wherein the length of the second TTI is less than the length of the first TTI.

9. The method of claim 7, wherein the length of the second TTI is equal to half the length of the first TTI.

10. The method of claim 7, wherein the method further comprises:
causing a request to be transmitted, wherein the request is for an uplink grant for the second physical resource of the second configuration (253) to transmit the data associated with the second service; and
waiting for a processing delay period after the request is transmitted before causing the data associated with the second service to be transmitted by the first physical resource of the first configuration (251) associated with the first service.

11. The method of claim 10, wherein the request for the uplink grant for the second physical resource of the second configuration (253) is to be transmitted after identifying the data associated with the second service.

12. The method of any one of claims 7-10, wherein the first service is an enhanced mobile broad-band, eMBB, service or a massive machine type communications, mMTC, service, and the second service is an ultra reliable and low latency communications, URLLC, service.

13. A computer-readable medium comprising instructions to cause a UE (103), upon execution of the instructions by one or more processors, to carry out the method of any one of claims 7 to 12.

## Patentansprüche

1. Vorrichtung, die in einem Benutzergerät, UE, (103) in einem Mobilkommunikationsnetz zu verwenden ist, um mit einem evolved node B, eNB, oder einem next generation Node B, gNB, (101) zu kommunizieren, umfassend:
einen Speicher (104g), um Informationen über eine Schwellenbedingung zu speichern; und
eine Verarbeitungsschaltung (102, 104, 106, 108) zum:
Identifizieren einer Uplink-Gewährung für eine erste physische Ressource einer ersten Konfiguration (251), die einem ersten Dienst mit einer ersten Priorität zugeordnet ist, wobei die erste physische Ressource der ersten Konfiguration (251) ein erstes Übertragungszeitintervall, TTI, umfasst;
Identifizieren von Daten, die einem zweiten Dienst mit einer zweiten Priorität zugeordnet sind, wobei die Daten auf eine zweite physische Ressource einer zweiten Konfiguration (253) bezogen sind, wobei die zweite physische Ressource der zweiten Konfiguration (253) ein zweites TTI umfasst und die erste Priorität niedriger als die zweite Priorität ist; und
Bestimmen, ob die Schwellenbedingung erfüllt ist, wobei die Schwellenbedingung der ersten Konfiguration (251), der zweiten Konfiguration (253), der ersten Priorität oder der zweiten Priorität zugeordnet ist und wobei die Schwellenbedingung ist, dass eine Länge des zweiten TTI größer als oder gleich einer halben Länge des ersten TTI ist; und
Bewirken, basierend auf der Schwellenbedingung, dass die Daten, die dem zweiten Dienst zugeordnet sind, durch die erste physische Ressource der ersten Konfiguration (251), die dem ersten Dienst zugeordnet ist, übertragen werden (301), wenn die Länge des zweiten TTI größer als oder gleich der halben Länge des ersten TTI ist.

2. Vorrichtung nach Anspruch 1, wobei die Länge des zweiten TTI kleiner als die Länge des ersten TTI ist.

3. Vorrichtung nach Anspruch 1, wobei die Länge des zweiten TTI gleich der halben Länge des ersten TTI ist.

4. Vorrichtung nach Anspruch 1, wobei die Verarbeitungsschaltung (102, 104, 106, 108) ferner zu Folgendem ausgelegt ist:
Bewirken, dass eine Anforderung übertragen wird, wobei die Anforderung eine Uplink-Gewährung für die zweite physische Ressource der zweiten Konfiguration (253) ist, um die Daten, die dem zweiten Dienst zugeordnet sind, zu übertragen; und
Warten auf einen Verarbeitungsverzögerungszeitraum, nachdem die Anforderung übertragen wird, bevor bewirkt wird, dass die Daten, die dem zweiten Dienst zugeordnet sind, durch die erste physische Ressource der ersten Konfiguration (251), die dem ersten Dienst zugeordnet ist, übertragen werden.

5. Vorrichtung nach Anspruch 4, wobei die Anforderung für die Uplink-Gewährung für die zweite physische Ressource der zweiten Konfiguration (253) nach dem Identifizieren der Daten, die dem zweiten Dienst zugeordnet sind, übertragen werden soll.

6. Vorrichtung nach einem der Ansprüche 1-4, wobei der erste Dienst ein enhanced mobile broad-band, eMBB, Dienst, oder ein massive machine type communications, mMTC, Dienst ist und der zweite Dienst ein ultra reliable and low latency communications, URLLC, Dienst ist.

7. Computerimplementiertes Verfahren, das in einem Benutzergerät, UE, (103) in einem mobilen Kommunikationsnetz zu verwenden ist, um mit einem Evolved Node B, eNB, oder einem next generation Node B, gNB, (101), zu kommunizieren, umfassend:
Identifizieren einer Uplink-Gewährung für eine erste physische Ressource einer ersten Konfiguration (251), die einem ersten Dienst mit einer ersten Priorität zugeordnet ist, wobei die erste physische Ressource der ersten Konfiguration (251) ein erstes Übertragungszeitintervall, TTI, umfasst;
Identifizieren von Daten, die einem zweiten Dienst mit einer zweiten Priorität zugeordnet sind, wobei die Daten auf eine zweite physische Ressource einer zweiten Konfiguration (253) bezogen sind, wobei die zweite physische Ressource der zweiten Konfiguration (253) ein zweites TTI umfassen und die erste Priorität niedriger als die zweite Priorität ist; und
Bestimmen, ob eine Schwellenbedingung erfüllt ist, wobei die Schwellenbedingung der ersten Konfiguration (251), der zweiten Konfiguration (253), der ersten Priorität oder der zweiten Priorität zugeordnet ist und wobei die Schwellenbedingung ist, dass eine Länge des zweiten TTI größer als oder gleich einer halben Länge des ersten TTI ist; und
Bewirken, basierend auf der Schwellenbedingung, dass die Daten, die dem zweiten Dienst zugeordnet sind, durch die erste physische Ressource der ersten Konfiguration (251), die dem ersten Dienst zugeordnet ist, übertragen werden (301), wenn die Länge des zweiten TTI größer als oder gleich der halben Länge des ersten TTI ist.

8. Verfahren nach Anspruch 7, wobei die Länge des zweiten TTI kleiner als die Länge des ersten TTI ist.

9. Verfahren nach Anspruch 7, wobei die Länge des zweiten TTI gleich der halben Länge des ersten TTI ist.

10. Verfahren nach Anspruch 7, wobei das Verfahren ferner umfasst:
Bewirken, dass eine Anforderung übertragen wird, wobei die Anforderung eine Uplink-Gewährung für die zweite physische Ressource der zweiten Konfiguration (253) ist, um die Daten, die dem zweiten Dienst zugeordnet sind, zu übertragen; und
Warten auf einen Verarbeitungsverzögerungszeitraum, nachdem die Anforderung übertragen wird, bevor bewirkt wird, dass die Daten, die dem zweiten Dienst zugeordnet sind, durch die erste physische Ressource der ersten Konfiguration (251), die dem ersten Dienst zugeordnet ist, übertragen werden.

11. Verfahren nach Anspruch 10, wobei die Anforderung für die Uplink-Gewährung für die zweite physische Ressource der zweiten Konfiguration (253) nach dem Identifizieren der Daten, die dem zweiten Dienst zugeordnet sind, übertragen werden soll.

12. Verfahren nach einem der Ansprüche 7-10, wobei der erste Dienst ein enhanced mobile broad-Band, eMBB, Dienst, oder ein massive machine type communications, mMTC, Dienst ist und der zweite Dienst ein ultra reliable and low latency communications, URLLC, Dienst ist.

13. Computerlesbares Medium, umfassend Anweisungen zum Bewirken, dass ein UE (103) bei Ausführung der Anweisungen durch einen oder mehrere Prozessoren das Verfahren nach einem der Ansprüche 7 bis 12 ausführt.

## Revendications

1. Un appareil destiné à être utilisé dans un équipement utilisateur, UE, (103) dans un réseau de communication mobile pour communiquer avec un nœud B évolué, eNB, ou un nœud B de prochaine génération, gNB, (101) comprenant :
une mémoire (104g) pour stocker une information concernant une condition de seuil ; et
un ensemble de circuits de traitement (102, 104, 106, 108) pour :
identifier une autorisation de liaison montante pour une première ressource physique d'une première configuration (251) associée à un premier service ayant une première priorité, la première ressource physique de la première configuration (251) comprenant un premier intervalle de temps de transmission, TTI ;
identifier des données associées à un second service ayant une seconde priorité, dans lequel les données sont liées à une seconde ressource physique d'une seconde configuration (253), la seconde ressource physique de la seconde configuration (253) comprenant un second TTI, et la première priorité est inférieure à la seconde priorité ; et
déterminer si la condition de seuil est remplie, dans lequel la condition de seuil est associée à la première configuration (251), la seconde configuration (253), la première priorité ou la seconde priorité, et dans lequel la condition de seuil est qu'une longueur du second TTI est supérieure ou égale à la moitié d'une longueur du premier TTI ; et
réaliser, sur la base de la condition de seuil, la transmission (301) des données associées au second service par la première ressource physique de la première configuration (251) associée au premier service lorsque la longueur du second TTI est supérieure ou égale à la moitié de la longueur du premier TTI.

2. L'appareil selon la revendication 1, dans lequel la longueur du second TTI est inférieure à la longueur du premier TTI.

3. L'appareil selon la revendication 1, dans lequel la longueur du second TTI est égale à la moitié de la longueur du premier TTI.

4. L'appareil selon la revendication 1, dans lequel l'ensemble de circuits de traitement (102, 104, 106, 108) sert en outre à :
réaliser la transmission d'une requête, dans lequel la requête sert à ce qu'une autorisation de liaison montante pour la seconde ressource physique de la seconde configuration (253) transmette les données associées au second service ; et
attendre pendant une période de retard de traitement après que la requête a été transmise avant de réaliser la transmission des données associées au second service par la première ressource physique de la première configuration (251) associée au premier service.

5. L'appareil selon la revendication 4, dans lequel la requête portant sur l'autorisation de liaison montante pour la seconde ressource physique de la seconde configuration (253) doit être transmise après l'identification des données associées au second service.

6. L'appareil selon l'une des revendications 1 à 4, dans lequel le premier service est un service à large bande mobile amélioré, eMBB, ou un service de communications machine massives, mMTC, et le second service est un service de communications ultrafiable et à faible latence, URLLC.

7. Un procédé mis en œuvre par ordinateur devant être utilisé dans un équipement utilisateur, UE, (103) dans un réseau de communication mobile pour communiquer avec un nœud B évolué, eNB, ou un nœud B de prochaine génération, gNB, (101) comprenant :
l'identification d'une autorisation de liaison montante pour une première ressource physique d'une première configuration (251) associée à un premier service ayant une première priorité, la première ressource physique de la première configuration (251) comprenant un premier intervalle de temps de transmission, TTI ;
l'identification de données associées à un second service ayant une seconde priorité, dans lequel les données sont liées à une seconde ressource physique d'une seconde configuration (253), la seconde ressource physique de la seconde configuration (253) comprenant un second TTI, et
la première priorité est inférieure à la seconde priorité ;
et
la détermination si une condition de seuil est remplie,
dans lequel la condition de seuil est associée à la première configuration (251), la seconde configuration (253), la première priorité ou la seconde priorité, et dans lequel la condition de seuil est qu'une longueur du second TTI est supérieure ou égale à la moitié d'une longueur du premier TTI ; et
la réalisation, sur la base de la condition de seuil, de la transmission (301) des données associées au second service par la première ressource physique de la première configuration (251) associée au premier service lorsque la longueur du second TTI est supérieure ou égale à la moitié de la longueur du premier TTI.

8. Le procédé selon la revendication 7, dans lequel la longueur du second TTI est inférieure à la longueur du premier TTI.

9. Le procédé selon la revendication 7, dans lequel la longueur du second TTI est égale à la moitié de la longueur du premier TTI.

10. Le procédé selon la revendication 7, dans lequel le procédé comprend en outre :
la réalisation de la transmission d'une requête, dans lequel la requête sert à ce qu'une autorisation de liaison montante pour la seconde ressource physique de la seconde configuration (253) transmette les données associées au second service ; et
l'attente pendant une période de retard de traitement après que la requête a été transmise avant de réaliser la transmission des données associées au second service par la première ressource physique de la première configuration (251) associée au premier service.

11. Le procédé selon la revendication 10, dans lequel la requête portant sur l'autorisation de liaison montante pour la seconde ressource physique de la seconde configuration (253) doit être transmise après l'identification des données associées au second dispositif.

12. Le procédé selon l'une des revendications 7 à 10, dans lequel le premier service est un service à large bande mobile amélioré, eMBB, ou un service de communications machine massives, mMTC, et le second service est un service de communications ultrafiable et à faible latence, URLLC.

13. Un support lisible par ordinateur comprenant des instructions pour amener un UE (103), lors de l'exécution des instructions par un ou plusieurs processeurs, à mettre en œuvre le procédé selon l'une des revendications 7 à 12.
